# EUROPEAN PATENT APPLICATION

(11) **EP 0 742 427 A1**
(43) Date of publication of application: **13.11.1996**
(21) Application number: 95303209.1
(22) Date of filing: 12.05.1995
(51) Int. Cl.: G01K 13/06

(54) **Temperature measuring apparatus**

(71) Applicant: Beta Instrument Company Limited, High Wycombe Bucks. HP12 3SW (GB)
(72) Inventor: Kyriakis, John, High Wycombe, Bucks HP12 3SW (GB)
(74) Representative: Cline, Roger Ledlie

(57) **Abstract**

A moving elongate object whose temperature is to be measured contacts a thermally conductive member carried by a thermally insulating support. The support and the member are movable together with the object in contact with the member and the temperature of the object is measured by measuring the temperature of the member.

## Description

This invention relates to the measurement of the surface temperature of elongated products which are manufactured on a continuous basis, for example, in processes such as extrusion and drawing. Examples of such elongated products are wires, cables, strands and filaments.

According to the invention there is provided temperature measuring apparatus comprising a thermally insulating support, a thermally conductive member carried by the support and adapted to contact a moving elongate object whose temperature is to be measured, the support and member being movable by friction between the object and the member, and means to measure the temperature of the member independently of the object.

The support may comprise a pulley on whose peripheral surface the member is carried, preferably in a groove. In this case the second path is circular. When the support is movable by rotation, the temperature measuring means preferably comprises a rotary transformer.

Means responsive to the temperature measuring means are preferably provided to adjust the temperature of the support towards the temperature measured by the temperature measuring means. The temperature adjusting means preferably comprises a heating chamber within which the support is located.

The thermally conductive member preferably comprises a ceramic surface adapted to contact the moving elongate object.

An example of the invention will now be described with reference to the accompanying drawings in which:

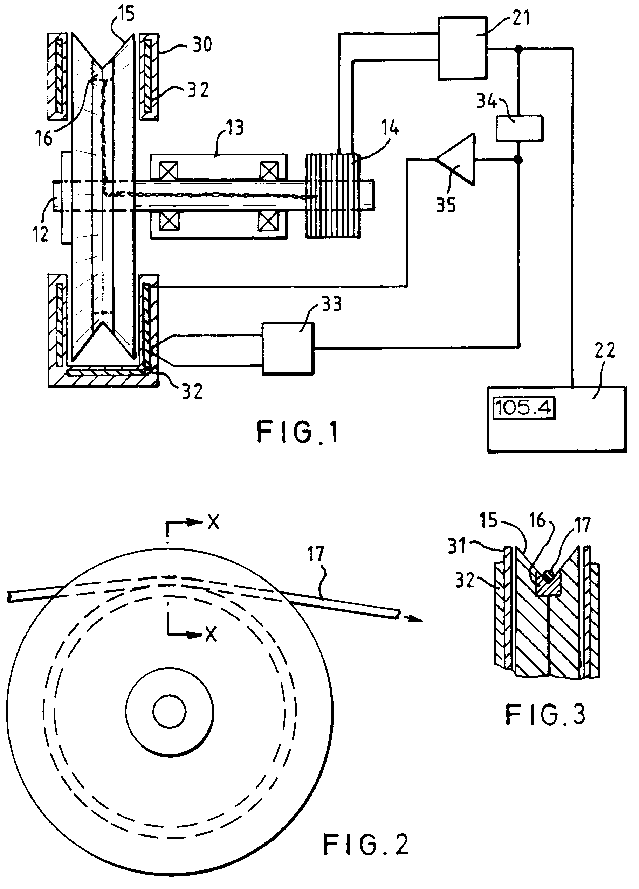

In Figure 1, a pulley 11 is provided with a horizontal shaft 12 which rotates in bearings 13 and is provided with a rotary transformer 14. The pulley 11 has a groove 15 in its peripheral surface at the base of which groove is a thermally conducting ring 16 with a ceramic surface. A thermocouple connection from the ring extends along the shaft 12 to the rotary transformer 14 whose output 15 is connected to a stationary electronic circuit 21 which amplifies and conditions the signal to operate an indicator unit 22 to indicate the temperature in the required units.

The elongate product moves in a path tangential to the ring 16 at the top of the pulley 11 which is caused to rotate by friction with the product at the same peripheral speed. A heating shroud 31 surrounds the pulley leaving the top and centre open and includes electrical heating coils 32 and a temperature measuring circuit 33 for measuring the temperature within the shroud. A feedback circuit 34 is responsive both to the output of the electronic circuit 21 and to the output of temperature measuring circuit 33 to control a power amplifier 35 which energises the heating coils 32 of the shroud. The circuit 34 acts to energise the power circuit 35 so as to maintain the temperatures sensed by the circuits 21, 33 as nearly equal as possible.

The temperature of the product is measured by measuring the temperature of the ring 16 with which it is in contact and so it is important that the ring has low thermal capacity in order that it can follow any changes in temperature of the product and it is also important that loss of heat from the product to the pulley and the surroundings are kept to a minimum so that the measured temperature reflects the temperature of the product which would occur if the present apparatus were not there at all. By providing the heating shroud 31 and controlling its temperature as close as possible to the measured temperature of the ring, the errors due to heat losses are kept to a minimum. Heat losses are mainly due to conduction and conduction heat losses are proportional to the temperature difference between the bodies in question. The heating shroud 31 keeps the temperature difference to a minimum and hence the heat losses to a minimum. It will be noted that the heating shroud is in the shape of an annulus and extends radially in both directions about the radius of the ring. Although the top of the heating shroud is left open to allow passage of the product in its path tangentially to the top of the ring, the heating shroud extends across the bottom of the pulley so as to radiate heat into the groove of the pulley when the heating coils are energised.

In one example, the pulley is of 125 mm diameter and the moving product of 0.4 mm diameter. The moving product moves at a linear speed of 2500 m/min and has a nominal temperature of 120°C whereas ambient temperature is of the order of 20°C. It was found that for a temperature of the moving conductor of 120°, the temperature of the metallic ring when the heating shroud was not in operation was about 114°C, whereas with the shroud in operation, the temperature of the ring was about 119°C. The error in the temperature measurement thus reduced from 6° to 1°, or from 5% to 1%.

## Claims

1. Temperature measuring apparatus comprising a thermally insulating support, a thermally conductive member carried by the support and adapted to contact a moving elongate object whose temperature is to be measured, the support and member being movable by friction between the object and the member, and means to measure the temperature of the member independently of the object.

2. Apparatus as claimed in claim 1 wherein the support comprises a pulley on whose peripheral surface the member is to be carried.

3. Apparatus as claimed in claim 2 wherein the peripheral surface is formed as a groove.

4. Apparatus as claimed in any one of claims 1 to 3 wherein the support is movable by rotation and the temperature measuring means comprises a rotary transformer.

5. Apparatus as claimed in any preceding claim comprising means responsive to the temperature measuring means to adjust the temperature of the support towards the temperature measured by the temperature measuring means.

6. Apparatus as claimed in claim 5 wherein the temperature adjusting means comprises a heating chamber within which the support is located.

7. Apparatus as claimed in any one of the preceding claims wherein the thermally conductive member comprises a ceramic surface adapted to contact the moving elongate object.
